# EUROPÄISCHE PATENTSCHRIFT

(11) **EP 3 815 238 B1**
(45) Veröffentlichungstag und Bekanntmachung des Hinweises auf die Patenterteilung: **13.12.2023**
(21) Anmeldenummer: 19732656.4
(22) Anmeldetag: 24.06.2019
(51) Int. Cl.: H02P 3/22, H02P 29/024

(54) **VORRICHTUNG ZUR DREHZAHLABHÄNGIGEN BREMSMOMENTREGELUNG FÜR PERMANENTMAGNETERREGTE E-MASCHINEN**
DEVICE FOR SPEED-DEPENDENT BRAKING TORQUE CONTROL FOR ELECTRICAL MACHINES EXCITED BY PERMANENT MAGNETS
DISPOSITIF POUR LA RÉGULATION DU COUPLE DE FREINAGE EN FONCTION DE LA VITESSE DE ROTATION POUR MACHINES ÉLECTRIQUES À EXCITATION PAR AIMANTS PERMANENTS

(30) Priorität: 28.06.2018 DE 102018210552
(43) Veröffentlichungstag der Anmeldung: 05.05.2021
(73) Patentinhaber: KNORR-BREMSE Systeme für Nutzfahrzeuge GmbH, 80809 München (DE)
(72) Erfinder: SCHALLER, Sebastian, 86462 Langweid (DE)
(86) Internationale Anmeldenummer: PCT/EP2019/066637
(87) Internationale Veröffentlichungsnummer: WO 2020/002211

(56) Entgegenhaltungen:
- US-A- 3 153 182
- US-A- 4 990 837
- US-A1- 2012 275 069

## Beschreibung

Die Erfindung betrifft eine Vorrichtung zur drehzahlabhängigen Bremsmomentregelung für permanentmagneterregte elektrische Maschinen (nachfolgend E-Maschinen genannt), die sowohl als Motor als auch als Generator betrieben werden können.

Bei permanentmagneterregten Maschinen trägt der Läufer der Maschine Permanentmagnete, die durch ein von drei um 120° versetzten Wicklungssträngen U, V, W erzeugtes elektrisch Feld angezogen oder abgestoßen werden. Das elektrische Feld der Wicklungsstränge wird dabei durch die Bestromung mit Dreiphasenwechselstrom erzeugt, wobei die drei Phasen ebenfalls um 120° versetzt sind und jeweils ein Wicklungsstrang durch eine Phase bestromt wird. Das somit rotierende Feld des Ständers erzeugt durch die Ausrichtung der Permanentmagnete an dem elektrischen Feld eine Rotationsbewegung des Läufers.

Die Regelung der Drehzahl von permanentmagneterregten E-Maschinen wird in der Regel über die Frequenz der Spannungsversorgung sichergestellt. Wird die Frequenz der Spannung erhöht, so erhöht sich ebenfalls die Drehzahl der E-Maschine. Soll die E-Maschine abgebremst werden, wird die Frequenz der Spannungsversorgung verringert, wodurch die Drehgeschwindigkeiten des elektrischen Feldes des Ständers und somit auch des Läufers langsamer werden.

Die Drehzahlregelung und somit die Bremsmomentregelung herkömmlicher Systeme ist daher abhängig von einer externen Spannungsversorgung. Bricht diese zusammen, so kann die Drehzahl der E-Maschine nicht geregelt werden, was besonders in Situationen, in denen sich die Drehzahl durch eine externe Einwirkung erhöht, problematisch ist.

Beispielsweise bei elektrisch betätigten Kupplungsaktuatoriksystemen ist eine Regelung des Bremsmomentes bei Abriss der Spannungsversorgung von hoher Wichtigkeit, da somit ein abruptes Schließen der Kupplung verhindert werden kann.

Dokument DE 10 2015 200 284 B3 offenbart eine Bremsmomentregelung entsprechend dem Oberbegriff des unabhängigen Anspruchs: Eine elektrische Maschine erzeugt eine bewegungsabhängige Motorspannung, die über ein Schaltelement an einen Bremsstromkreis angelegt wird, welcher die Motorklemmen pulsweitenmoduliert kurzschließt und eine wirksame Bremskraft zur Dämpfung der Bewegung einstellt.

US 4 990 837 A beschreibt eine Vorrichtung zur Steuerung eines Motors. Unter anderem weist sie als Schaltelement ein Relais auf, das mittels einer über Dioden von den Statorwicklungen des Motors abgeleitete Spannung gesteuert wird. Wenn die an dem Relais abfallende Spannung eine vorbestimmte Schwelle unterschreitet, fällt das Relais ab, wodurch die die Statorwicklungen des Motors gegen Masse kurzgeschlossen werden und der Motor angehalten wird.

Ähnliche Vorrichtungen sind in US 3 153 182 A und US 2012 / 275 069 A1 beschrieben.

Es ist eine Aufgabe der Erfindung, eine vereinfachte Bremsmomentregelung bereit zu stellen, die in Abhängigkeit der Drehzahl ein Bremsmoment auf den Läufer der E-Maschine ausübt, ohne dabei eine externe Spannungsversorgung zu benötigen.

Diese Aufgabe wird mit einer Vorrichtung gemäß des Hauptanspruchs gelöst. Vorteilhafte Weiterbildungen der Erfindung sind in den Unteransprüchen enthalten.

Erfindungsgemäß besteht die Lösung der Aufgabe in einer Vorrichtung, die ein Schaltelement aufweist, das im leitenden Zustand eine E-Maschine kurzschließt und somit ein Bremsmoment auf den Läufer der E-Maschine erzeugt wird. Das Schaltelement wird dabei in Abhängigkeit der induzierten Spannung, die in der E-Maschine selbst erzeugt wird, gesteuert. Die induzierte Spannung wird dabei durch das rotierende Feld der Permanentmagneten in den Wicklungssträngen der E-Maschine hervorgerufen und ist somit abhängig von der Drehzahl des Läufers.

Somit ist es durch gesteuertes Schalten des Schaltelements möglich eine drehzahlabhängige Regelung des Bremsmomentes zu erzielen, ohne dabei auf eine externe Energiezufuhr angewiesen zu sein. Dies stellt einen enormen Sicherheitsgewinn dar, da eine steuerbare Bremsmomentregelung auch bei einem Ausfall der Spannungsversorgung gewährleistet ist.

In einer vorteilhaften Ausführungsform schließt das Schaltelement im leitenden Zustand die Motorphasen der E-Maschine vorzugsweise gegen Masse, Spannungsversorgung oder gegeneinander kurz.

In vorzuziehenden Ausführungsformen ist das Schaltelement dazu konfiguriert im leitenden Zustand die Motorphasen der E-Maschine gegen Masse, die Spannungsversorgung oder gegeneinander kurzzuschließen.

Ein Sperrelement, das die Funktion eines Gleichrichters übernimmt, wird dazu verwendet, die induzierte Spannung, die in der E-Maschine erzeugt wird, gleichzurichten.

Weiterhin ist ein Verzögerungsglied vorgesehen, das dazu dient eine Eingangsspannung Uₑ so gezielt zu übertragen, dass die Ausgangsspannung Uₐ des Verzögerungsgliedes als Steuerspannung für ein Schaltelement besser eingesetzt werden kann. Um dieses zu erreichen wird die Eingangsspannung Uₑ durch das Verzögerungsglied verzögert und/oder geglättet.

Das Verzögerungsglied ist dabei vorzugsweise als PT1-Glied ausgeführt. Eine einfache Form eines verwendbaren PT1-Gliedes ist dabei ein RC-Glied, bestehend aus einem Widerstand und einem Kondensator.

Somit stellt vorzugsweise die Ausgangsspannung des Verzögerungsgliedes die Steuerspannung für das Schaltelement dar.

Da das System lediglich bei Ausfall der angelegten Spannung eine drehzahlabhängige Bremsmomentregelung auszuführen hat, ist die Vorrichtung vorzugsweise so konfiguriert, dass die Steuerung des Schaltelements, in Abhängigkeit der induzierten Spannung, nur bei einem Ausfall der Spannungsversorgung aktiv ist. Dies wird durch das Anlegen der Spannungsversorgung an das System sichergestellt, da von der E-Maschine lediglich Strom induziert werden kann, wenn keine Spannung aus der Spannungsversorgung anliegt. Somit wird gewährleistet, dass die Bremsmomentregelung bei angelegter Spannungsversorgung nicht eingreifen kann.

Vorzugsweise ist weiterhin nach der Gleichrichtung der induzierten Spannung, die in der E-Maschine erzeugt wird, eine Spannungsbegrenzungseinrichtung wie beispielsweise eine Z-Diode angeordnet. Damit können eventuell auftretende zu hohe Spannungsspitzen, die Elemente des Regelkreises beschädigen könnten, vermieden werden.

Zudem wird die Steuerung des Schaltelements über dessen Hysterese, die durch einen ersten Schwellenwert Usc und einen zweiten Schwellenwert Uso, der kleiner ist als der erste Schwellenwert Usc, gekennzeichnet ist, realisiert. Erreicht die Ausgangsspannung des Verzögerungsglieds den ersten Schwellenwert Usc, so schließt das Schaltelement und schließt somit die E-Maschine kurz, wodurch ein Bremsmoment erzeugt wird. Unterschreitet die Ausgangsspannung Uₐ den zweiten Schwellenwert Uso, so öffnet das Schaltelement und beendet den kurzgeschlossenen Zustand der E-Maschine.

Die beiden Schwellenwerte Usc und Uso können in einer vorteilhaften Ausführungsform durch eine Schwellenwertsteuerung, die Bestandteil des Schaltelements ist, an die jeweiligen Erfordernisse angepasst werden. Auf diese Weise ist es möglich, das über einen gewissen Zeitraum gemittelte Bremsmoment einzustellen und somit eine stärkere beziehungsweise geringere Drehzahlreduzierung zu erreichen und ebenfalls ein Abbremsen des Läufers bis zum Stillstand zu realisieren.

Vorzugsweise wird die Erfindung in einem elektrisch betätigten Kupplungsaktuatoriksystem verwendet, um das schnelle Schließen der Kupplung bei einem Abriss der Spannungsversorgung durch die Bremsmomentregelung verhindert werden kann.

Im Folgenden wird eine Ausführungsform der Erfindung anhand der beigefügten Figuren näher beschrieben. Sie zeigen:
- **Fig. 1**: Schematischer Aufbau einer Ausführungsform der Erfindung.
- **Fig. 2**: Diagramm zur Erläuterung der Funktionsweise der Erfindung durch die Darstellung der Zusammenhänge zwischen der Eingangsspannung, der Ausgangsspannung und der Drehzahl der E-Maschine.

Die erläuterte Ausführungsform der Erfindung ist dazu konfiguriert, die Drehzahl einer E-Maschine nach einem Spannungsabfall in einem festgelegten Korridor zu halten, obwohl der E-Maschine durch externe Einwirkung Energie zugeführt wird und somit die

Drehzahl der E-Maschine sich ohne die Bremsmomentregelung erhöhen würde. Ein Anwendungsbeispiel dieses Szenarios wäre beispielsweise, der Energieversorgungsausfall eines E-maschinen-betriebenen Fahrzeugs, das bergab fährt.

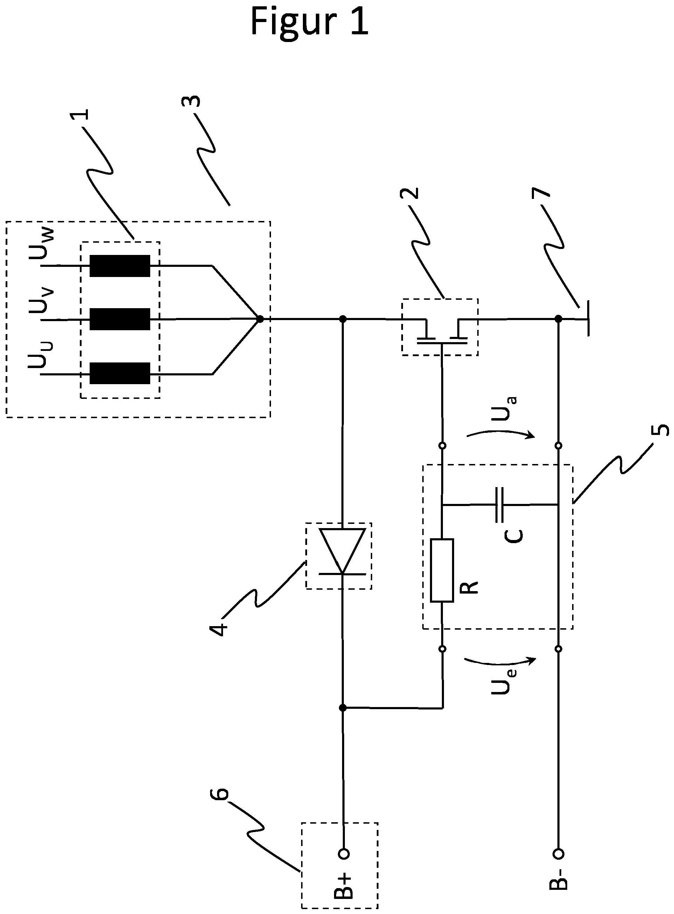

**Fig. 1** zeigt den schematischen Aufbau dieser Ausführungsform der Erfindung. Eine Spannungsversorgung 6 ist vorgesehen, und versorgt drei Motorphasen 1 einer E-Maschine 3 mit Spannung. Ein Schaltelement 2 schließt in Abhängigkeit von einer Ausgangsspannung Uₐ eines vorgeschalteten Verzögerungsgliedes 5, bestehend aus einem Widerstand R und einem Kondensator C, die E-Maschine 3 kurz, indem es eine elektrische Verbindung zwischen E-Maschine und Masse 7 herstellt. Eine Eingangsspannung Uₑ liegt an dem Verzögerungsglied 5 an. Ein Sperrelement 4 ist zur Gleichrichtung der von der E-Maschine induzierten Spannung vorgesehen.

Wird die Spannungsversorgung 6 unterbrochen, wird von den Phasen 1 der E-Maschine 3 eine Spannung induziert. Diese Spannung wird im Sperrelement 4 gleichgerichtet und liegt anschließend an dem Verzögerungsglied 5 an. Aufgrund des Übertragungsverhaltens des Verzögerungsgliedes 5 in Form eines PT1-Glieds, läuft die Ausgangsspannung Uₐ des Verzögerungsglieds 5 der Eingangsspannung Uₑ hinterher und ist geglättet.

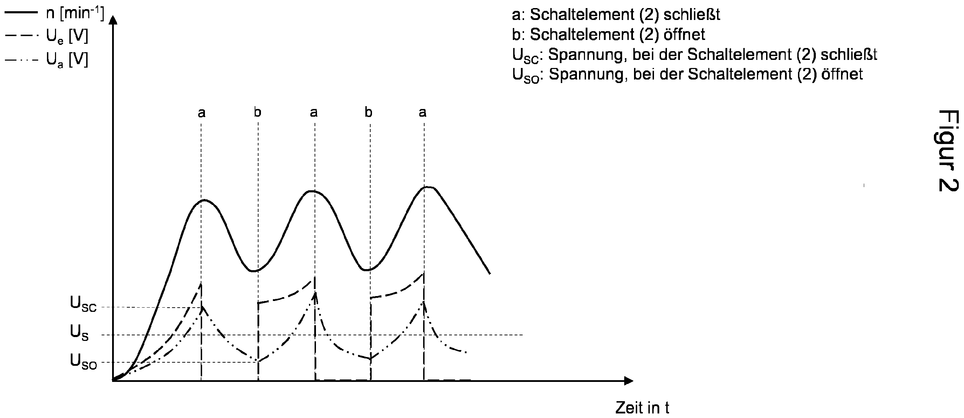

**Fig. 2** zeigt ein Diagramm zur Erläuterung der Funktionsweise der Erfindung, durch die Darstellung der Zusammenhänge zwischen der Eingangsspannung Uₑ, der Ausgangsspannung Uₐ und der Drehzahl n der E-Maschine. Die Erläuterung der ersten Ausführungsform der Erfindung wird anhand der Betrachtung beider **Figs 1** und **2** vorgenommen.

Bricht die Spannungsversorgung des Systems zusammen, und unterliegt die E-Maschine 3 gleichzeitig einer externen Energiezufuhr, erhöht sich die Drehzahl der E-Maschine 3. Somit erhöht sich ebenso die von der E-Maschine 3 induzierte Spannung, wodurch die Eingangsspannung Uₑ und, verzögert durch das Verzögerungsglied 5, die Ausgangsspannung Uₐ ansteigen. Erreicht Uₐ einen definierten Schwellenwert Usc schließt sich das Schaltelement und stellt somit eine elektrische Verbindung zwischen der E-Maschine 3 und der Masse 7 her. Die Spannung zur Regeleinrichtung geht gegen Null und durch das somit erzeugte Bremsmoment sinkt die Drehzahl des Motors.

Durch das Verzögerungsglied 5 wird in Abhängigkeit der Kapazität des Kondensators und der Größe des Widerstandes im RC-Glied die Spannung über einen definierten Zeitraum abgebaut, bis die Ausgangsspannung Uₐ einen vorher festgelegten unteren Schwellenwert Uso erreicht und das Schaltelement 2 daraufhin die elektrische Verbindung zwischen Masse 7 und E-Maschine 3 wieder trennt. Das Bremsmoment geht gegen Null und die Drehzahl der E-Maschine nimmt wieder zu, während die Eingangsspannung Uₑ sprunghaft ansteigt. Dieser Vorgang wiederholt sich, wodurch die Drehzahl in einem gewünschten Korridor gehalten werden kann. Durch die entsprechende Auswahl von Wiederstand und Kapazität kann das durchschnittlich anliegende Bremsmoment im Voraus auf das Gesamtsystem eingestellt werden.

In einer anderen Ausführungsform kann die Vorrichtung im Falle eines Zusammenbruchs der Spannungsversorgung dazu eingesetzt werden, die Drehzahl der E-Maschine 3 durch das Aufbringen eines Bremsmoments gezielt zu verringern. Der Aufbau des Systems ist dabei grundsätzlich der Gleiche wie im oben ausgeführten Ausführungsbeispiels, außer, dass das Schaltelement 2 eine Schwellenwertsteuerung aufweist, die die Schwellenwerte Usc und Uso verändern kann.

Anders als im zuvor ausgeführten Beispiel erhöht sich nach Spannungsabfall aufgrund der fehlenden externen Einwirkung nicht die Drehzahl n der E-Maschine 3, sondern bleibt, abzüglich kleinerer Reibungsverluste und Ummagnetisierungsverluste der Wicklungen, in guter Näherung konstant.

Durch die konstante Drehzahl n wird dennoch, wie in der obigen Ausführungsform, eine Spannung in den Wicklungen induziert. Somit wird auch hier der Schwellenwert Usc von der Ausgangsspannung Uₐ erreicht und die E-Maschine kurzgeschlossen. Analog zur obigen Ausführung wird ein Bremsmoment auf den Läufer erzeugt und somit die Drehzahl n reduziert. Sinkt die Ausgangsspannung Uₐ auf den unteren Schwellenwert U_{SO}, hebt das Schaltelement den kurzgeschlossenen Zustand wieder auf und das Bremsmoment am Läufer geht gegen Null, wodurch die Drehzahl n sich wieder stabilisiert und in der Folge konstant bleibt, allerdings auf einem niedrigeren Niveau als vor dem ersten Schließen des Schaltelements.

Daraufhin liegt wieder die in den Wicklungen induzierte Spannung am Verzögerungsglied an, wodurch die Eingangsspannung Uₑ sprunghaft und die Ausgangsspannung Uₐ verzögert ansteigen. Da nun aufgrund der niedrigeren Drehzahl die Eingangsspannung Uₑ geringer ist als vor dem ersten Schließen des Schaltelements, dauert es länger bis der Kondensator C des Verzögerungsgliedes 5 geladen ist und folglich auch bis die Ausgangsspannung Uₐ den oberen Schwellenwert Usc erreicht und somit bis das Schaltelement 2 sich ein zweites Mal schließt.

Damit dieser Effekt verhindert wird und keine zeitliche Verzögerung auftritt, wird der obere Schwellenwert nach unten angepasst und somit früher ein Schließen des Schaltelements ausgelöst. Diese Einstellung wird von der Schwellenwertsteuereinheit vorgenommen, die in dieser Ausführungsform Bestandteil des Schaltelements ist. Analog dazu wird ebenso der untere Schwellenwert Uso herabgesetzt um weiterhin die gleiche Entladedauer des Kondensators des Verzögerungsglieds 5 und damit die gleiche Dauer des anliegenden Bremsmoments sicher zu stellen.

Durch Veränderung der Schwellenwerte ist es also wie gezeigt möglich, die Intensität der über einen Zeitraum gemittelten Drehzahlreduzierung der E-Maschine variabel einzustellen und ebenso ein Abbremsen bis zum Stillstand zu realisieren. Diese Einstellung der Schwellenwertsteuereinheit wird in Abhängigkeit vom Bremsbefehl des Benutzers vorgenommen.

Es wird also eine Vorrichtung zur drehzahlabhängigen Bremsmomentregelung für permanentmagneterregte E-Maschinen offenbart, wobei ein Schaltelement 2, bei einer Unterbrechung der Spannungsversorgung 6 in Abhängigkeit der induzierten Spannung der E-Maschine 3, die E-Maschine 3 gezielt kurzschließt und somit ein Bremsmoment auf den Läufer der E-Maschine 3 erzeugt. Unterschreitet die induzierte Spannung einen definierten Wert, hebt das Schaltelement 2 den kurzgeschlossenen Zustand der E-Maschine 3 auf, wodurch das Bremsmoment gegen Null geht und die Drehzahl nicht verringert wird. Durch ein abwechselndes Öffnen und Schließen des Schaltelements 2 kann somit die Drehzahl n gezielt gedrosselt werden oder im Falle einer externen Einwirkung auf die E-Maschine, wie im ersten Ausführungsbeispiel, in einem festgelegten Korridor gehalten werden.

### BEZUGSZEICHENLISTE

- 1: Motorphasen
- 2: Schaltelement
- 3: E-Maschine
- 4: Sperrelement
- 5: Verzögerungsglied
- 6: Spannungsversorgung
- 7: Masse
- Uₑ: Eingangsspannung
- Uₐ: Ausgangsspannung
- U_{SC}: oberer Schwellenwert
- U_{SO}: unterer Schwellenwert
- n: Drehzahl E-Maschine

## Patentansprüche

1. Vorrichtung zur drehzahlabhängigen Bremsmomentregelung für permanentmagneterregte E-Maschinen, aufweisend:
ein Schaltelement (2), dazu angeordnet und konfiguriert, im leitenden Zustand eine E-Maschine (3) kurzzuschließen,
wobei das Schaltelement (2) abhängig von einer induzierten Spannung, die von der E-Maschine (3) erzeugt wird, gesteuert wird,
wobei die Vorrichtung weiterhin einen Gleichrichter aufweist, der dazu konfiguriert ist, die von der E-Maschine (3) erzeugte induzierte Spannung zum Erzeugen einer gleichgerichteten Spannung gleichzurichten,
**gekennzeichnet dadurch dass**
ein Verzögerungsglied (5) dazu angeordnet und konfiguriert ist, die gleichgerichtete Spannung verzögert und/oder geglättet zu übertragen,
wobei das Schaltelement (2) so konfiguriert ist, dass es beim Überschreiten eines ersten Schwellenwertes Usc einer geglätteten und/oder verzögerten Ausgangsspannung Uₐ des Verzögerungsglieds (5) die E-Maschine (3) kurzschließt und dass es beim Unterschreiten eines zweiten Schwellenwertes Uso der verzögerten und/oder geglätteten Ausgangsspannung Uₐ, der kleiner ist als der erste Schwellenwert Usc, den kurzgeschlossenen Zustand der E-Maschine aufhebt.

2. Vorrichtung zur drehzahlabhängigen Bremsmomentregelung gemäß Anspruch 1, wobei das Schaltelement (2) eine Schwellenwertsteuerung aufweist, die so konfiguriert ist, dass sie in Abhängigkeit des Bremsbefehls des Anwenders die Schwellenwerte Usc und Uso der Ausgangsspannung Uₐ variabel einstellt.

3. Vorrichtung zur drehzahlabhängigen Bremsmomentregelung für permanentmagneterregte E-Maschinen gemäß Anspruch 1 oder 2, wobei das Schaltelement (2) dazu angeordnet und konfiguriert ist, im leitenden Zustand die Motorphasen (1) der E-Maschine (3) vorzugsweise gegen Masse (7), Spannungsversorgung (6) oder gegeneinander kurzzuschließen.

4. Vorrichtung zur drehzahlabhängigen Bremsmomentregelung gemäß einem der vorangehenden Ansprüche, wobei das Verzögerungsglied (5) ein PT1-Glied, vorzugsweise ein RC-Glied, ist.

5. Vorrichtung zur drehzahlabhängigen Bremsmomentregelung gemäß einem der vorangehenden Ansprüche, wobei der Ausgang des Verzögerungsgliedes (5) elektrisch mit einem Steuereingang des Schaltelements (2) verbunden ist.

6. Vorrichtung zur drehzahlabhängigen Bremsmomentregelung gemäß einem der vorangehenden Ansprüche, wobei die Vorrichtung so konfiguriert ist, dass die Steuerung des Schaltelements (2) in Abhängigkeit von der induzierten Spannung nur bei einem Ausfall einer Spannungsversorgung (6) aktiv ist.

7. Vorrichtung zur drehzahlabhängigen Bremsmomentregelung gemäß einem der vorangehenden Ansprüche 3 bis 7, wobei eine Spannungsbegrenzungseinrichtung, vorzugsweise eine Z-Diode, hinter dem Gleichrichter zur Spannungsbegrenzung angeordnet ist.

8. Verwendung einer Vorrichtung zur drehzahlabhängigen Bremsmomentregelung gemäß den vorangehenden Ansprüchen in einem elektrisch betätigten Kupplungsaktuatoriksystem.

## Claims

1. A device for speed-dependent braking torque control for permanent-magnet-excited electrical machines having:
a switching element (2) that is arranged and configured to short-circuit an electrical machine (3) when in the conductive state,
the switching element (2) being controlled as a function of an induced voltage that is generated by the electrical machine (3),
the device further having a rectifier that is configured to rectify the induced voltage generated by the electrical machine (3) in order to generate a rectified voltage,
**characterised in that**
a delay element (5) is arranged and configured to transmit the rectified voltage in a delayed and/or smoothed manner,
the switching element (2) being configured in such a way that when a smoothed and/or delayed output voltage Uₐ of the delay element (5) exceeds a first threshold value U_{SC} it short-circuits the electrical machine (3), and that when ta smoothed and/or delayed output voltage Uₐ that is lower than the first threshold voltage Use falls below a second threshold value U_{SO} it overrides the shortcircuited state of the electrical machine.

2. A device for speed-dependent braking torque control according to claim 1, the switching element (2) having a threshold control device that is configured in such a way that it variably sets the threshold values Usc and Use of the output voltage Uₐ dependent on the braking command given by the user.

3. A device for speed-dependent braking torque control for permanent-magnet-excited electrical machines according to claim 1 or 2, the switching element (2) being arranged and configured to short-circuit the motor phases (1) of the electrical machine (3) preferably to ground (7), to the power supply (6) or to one another when in the conductive state.

4. A device for speed-dependent braking torque control according to any one of the preceding claims, the delay element (5) being a PT1 element, preferably an RC element.

5. A device for speed-dependent braking torque control according to any one of the preceding claims, the output of the delay element (5) being electrically connected to a control input of the switching element (2).

6. A device for speed-dependent braking torque control according to any one of the preceding claims, the device being configured in such a way that the control of the switching element (2) as a function of the induced voltage is active only when a power supply (6) fails.

7. A device for speed-dependent braking torque control according to any one of the claims 3 to 7 above, a voltage-limiting device, preferably a Zener diode, being arranged downstream of the rectifier in order to limit the voltage.

8. The use of a device for speed-dependent braking torque control according to any one of the preceding claims in an electrically activated clutch actuator system.

## Revendications

1. Montage de régulation du couple de freinage en fonction de la vitesse de rotation pour des machines électriques à excitation par aimants permanents, comportant :
un élément (2) de coupure, qui est monté et configuré pour court-circuiter, dans l'état conducteur, une machine (3) électrique,
dans lequel l'élément (2) de coupure est commandé par une tension induite, qui est produite par la machine (3) électrique,
dans lequel le montage comporte en outre un redresseur, qui est configuré pour redresser la tension induite produite par la machine (3) électrique, afin de produire une tension redressée,
**caractérisé par**
un élément (5) de temporisation, qui est monté et configuré pour transmettre, de manière retardée et/ou lissée, la tension redressée,
dans lequel l'élément (2) de coupure est configuré pour court-circuiter la machine (3) électrique, si une première valeur Usc de seuil d'une tension Uₐ de sortie lissée et/ou retardée de l'élément (5) de temporisation est dépassée et en ce que, si l'on passe en-dessous d'une deuxième valeur Uso de seuil de la tension Uₐ de sortie retardée et/ou lissée, qui est plus basse que la première valeur U_{SC} de seuil, l'état court-circuité de la machine électrique est supprimé.

2. Montage de régulation du couple de freinage en fonction de la vitesse de rotation suivant la revendication 1, dans lequel l'élément (2) de coupure a une commande de valeur de seuil, qui est configurée de manière à régler les valeurs U_{SC} et U_{SO} de seuil de la tension Uₐ de sortie en fonction de l'instruction de freinage de l'utilisateur.

3. Montage de régulation du couple de freinage en fonction de la vitesse de rotation pour des machines électriques par excitation par aimants permanents suivant la revendication 1 ou 2, dans lequel l'élément (2) de coupure est monté et configuré de manière à court-circuiter, dans l'état conducteur, des phases (1) de moteur de la machine (3) électrique, de préférence vis-à-vis de la masse (7), de l'alimentation (6) en tension ou entre elles.

4. Montage de régulation du couple de freinage en fonction de la vitesse de rotation suivant l'une des revendications précédentes, dans lequel l'élément (5) de temporisation est un élément PT1, de préférence un élément RC.

5. Montage de régulation du couple de freinage en fonction de la vitesse de rotation suivant l'une des revendications précédentes, dans lequel la sortie de l'élément (5) de temporisation est reliée électriquement à une entrée de commande de l'élément (2) de coupure.

6. Montage de régulation du couple de freinage en fonction de la vitesse de rotation suivant l'une des revendications précédentes, dans lequel le montage est configuré de manière à ce que la commande de l'élément (2) de coupure soit active en fonction de la tension induite, seulement s'il y a une défaillance de l'alimentation (6) en tension.

7. Montage de régulation du couple de freinage en fonction de la vitesse de rotation suivant l'une des revendications 3 à 7 précédentes, dans lequel un dispositif de limitation de la tension, de préférence une diode Z est montée derrière le redresseur pour limiter la tension.

8. Utilisation d'un montage de régulation du couple de freinage en fonction de la vitesse de rotation suivant les revendications précédentes dans un système à actionneur d'accouplement actionné électriquement.
